(19) Europäisches Patentamt
European Patent Office
Office européen des brevets

(11) Publication number: **0 272 114 B1**

(12) **EUROPEAN PATENT SPECIFICATION**

(45) Date of publication of patent specification: **19.06.91**

(51) Int. Cl.[5]: **C08L 25/04**, C08K 13/04, //(C08K13/04,3:22,5:06,5:10, 5:13,7:14)

(21) Application number: **87311103.3**

(22) Date of filing: **16.12.87**

The file contains technical information submitted after the application was filed and not included in this specification

# (54) Mold products of an elastomeric composition containing styrenic resin.

(30) Priority: **16.12.86 JP 300332/86**
**27.01.87 JP 17744/87**

(43) Date of publication of application:
**22.06.88 Bulletin 88/25**

(45) Publication of the grant of the patent:
**19.06.91 Bulletin 91/25**

(84) Designated Contracting States:
**DE FR GB NL**

(56) References cited:
**DE-A- 2 642 094**
**FR-A- 2 292 006**
**US-D- 519 095**

**PATENT ABSTRACTS OF JAPAN, vol. 6, no. 135 (C-115)[1013], 22 July 1982**

(73) Proprietor: **SUMITOMO CHEMICAL COMPANY, LIMITED**
**Kitahama 4-chome 5-33**
**Chuo-ku Osaka 541(JP)**

(72) Inventor: **Okamoto, Yasushi**
**1223-11, Sonnou-cho**
**Chiba-shi Chiba(JP)**
Inventor: **Kanno, Yoshinori**
**9-18, Higashihonmachi**
**Chiba-shi Chiba(JP)**

(74) Representative: **Diamond, Bryan Clive et al**
**Gee & Co., Chancery House, Chancery Lane**
**London WC2A 1QU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 272 114 B1**

## Description

This invention relates to molded products obtainable from a reinforced styrene-based resin composition, more particularly to a styrene-based composition which has excellent flame retardance, heat resistance and impact strength without reduction in the inherent mechanical characteristics of a styrenic resin. The composition provides a material useful as armoring materials, for e.g. light electrical appliances and office machines.

Styrene-based synthetic resins modified (reinforced) with a rubbery elastomer form a material which is excellent in processability, mechanical properties, especially impact strength, and electrical properties and are in wide use as various molded products used in electrical industry.

However, such rubber-modified styrene-based resins are limited in their use because of their ready combustibility and comparatively low resistance to heat generated by or radiated from electrical circuits.

Therefore, in order to obviate this ready combustibility, there are known methods which impart flame retardance to styrene-based resins by incorporating therein various organic halogen compounds, phosphoric ester compounds or antimony compounds.

Although the addition of these flame-retarding agents to styrene-based resins made them flame-retardant, it also gave rise to such defects as impairment of thermal properties and mechanical properties.

In order to impart especially sufficient flame retardance, it is required to add a large amount of flame retarding agent, but in such a case, it is a defect that the heat resistance and impact resistance, markedly decrease as the amount of the flame retarding agent added increases.

Further, the styrene-based resins having these flame-retarding agents added are very poor in lightfastness, so that in the case where they are used as an armoring material of light electrical appliances or office machines, that are liable to discolor by natural light or rays from artificial illumination, and in particular with material which is toned to a white color or light color, and so they could be hardly used as such.

US-D-519095 disclosed flame-retardant compositions of (a) 50-80 wt % of a Styrene-acrylonitrile copolymer, (b) a flame-retarding brominated biphenyl or brominated biphenyl oxide, e. g. in amount of at least 7 wt % and containing 81-83 wt % of bromine, (c) antimony trioxide in amount of 3.2 to 9.3 wt %, and (d) 8 to 30 wt % of reinforcing glass fibers. The compositions were fabricated by injection molding; the resultant speciments had L Test Flammability classification of V-2.

DE-A-2652094 disclosed a flame-retardant composition which can comprise (a) polyphenylene oxide, (b) 1 to 10 wt % of a brominated aromatic compound, which is specifically exemplified by a bromo diphenyl alkylene ether, (c) 0.5 to 10 wt % of an antimony compound, e. g. antimony trioxide, and (d) glass fibers. The molded specimens had a flammability classification of V-0.

We have devised improved molded products of this type, by using a rubbery component (a); we thus provide a flame-retardant styrene-based resin composition which is excellent in flame retardance and impact resistance, while alleviating the above described problems in the prior art.

According to the invention a molded product obtainable by molding a flame-retardant styrene-based resin composition comprises:

(a) 100 parts by weight of a blend of a styrene-based resin and a rubber-modified styrene-based resin, or a rubber-modified styrene-based resin;

(b) from 1 to 45 parts by weight of a bromine compound having a bromine content of 40 wt % or more and a melting point of 80 °C or higher;

(c) from 0.5 to 15 parts by weight of antimony trioxide; and

(d) from 1 to 30 parts by weight of glass fibers, wherein the heat distortion temperature of said molded product obtainable from said composition is 85 °C or higher and the impact strength thereof is 5.0 kg.cm/cm or more.

The styrene-based resins used in the component (a) in this invention include not only polymers that can be obtained by homopolymerization of styrenic monomers (such as styrene, methylstyrene or chlorostyrene ) such as polystyrene, polymethylstyrene or polychlorostyrene, but also copolymers of these styrenic monomers.

These styrene-based resins can be prepared by various polymerization processes such as bulk polymerization, solution polymerization, emulsion polymerization, suspension polymerization or bulk-suspension polymerization.

The rubber-modified styrene-based resins which are also used in the component (a) in this invention include rubber-modified copolymers of styrenic monomers (such as styrene, methylstyrene, chlorostyrene) and other copolymerizable monomers or elastomers.

As other monomers copolymerizable with the styrenic monomers, there can be mentioned, for example, acrylonitriles (such as acrylonitrile or methacrylonitrile); unsaturated carboxylic acids (such as acrylic acid or

methacrylic acid); unsaturated carboxylic acid esters (such as methyl acrylate or methyl methacrylate); dienes (such as butadiene, isoprene or chloroprene); olefins (such as 1-butene or 1-pentene ); and $\alpha,\beta$ -unsaturated carboxylic acids or anhydrides thereof (such as maleic anhydride).

Also, as the elastomers copolymerizable with the styrenic monomers, there can be mentioned polydiene rubbers (such as butadiene rubber, isoprene rubber or chloroprene rubber); styrene-diene elastomers (such as styrene-butadiene rubber); and block copolymer elastomers having a polybutadiene block in the molecular structure (such as styrene-butadiene-styrene rubber).

These rubber-modified styrene-based resins can also be prepared by the same various polymerization processes as for the above described styrene-based resins.

It is preferable that the blend of a styrene-based resin and a rubber-modified styrene-based resin or the rubber-modified styrene-based resin which is used as the component (a) has a heat distortion temperature of 75 ° C or higher. If the heat distortion temperature is lower than 75 ° C, it is difficult to obtain flame-retardant styrene-based resin composition having the required heat distortion temperature of 85 ° C or higher.

Further, as the base resin component (a), a blend of a styrene-based resin and a rubber-modified styrene-based resin or a rubber-modified styrene-based resin may be used alone, or each can be a mixture of two or more thereof selected independently and in any desired proportion.

The heat distortion temperature, which is used as an index of heat resistance in this specification, is measured at a fiber stress of 18.6 $kg/cm^2$ according to JIS K7207.

The impact strength is measured on a notched specimen of which a molded product has a thickness of 2 mm, according to ASTM D256.

In the bromine compounds used as a flame-retarding agent as the component (b) in this invention, the bromine content is 40 wt% or more, preferably 50 wt% or more; and the melting point is 80 ° C or higher, preferably 150 ° C or higher, and more preferably 250 ° C or higher.

As the bromine compounds, there can be mentioned, for example, decabromodiphenyl oxide, octabromodiphenyl oxide, tetrabromobisphenol A, tetrabromobisphenol A-bis-(2,3-dibromopropyl) oxide, tetrabromobisphenol S and bis-(tribromophenoxy)ethane. A preferred bromine compound is tetrabromobisphenol A carbonate oligomer having as repeating units number (n) an integer of 3 to 20.

In this oligomer, when n is larger than 20, though the heat resistance of the flame-retardant styrene-based resin composition can be improved, the impact strength is lowered; and when n is smaller than 3, though the impact strength is good, the heat resistance is not improved, so that these cases are all undesirable.

The bromine compounds are not limited to those mentioned above, and they may be used singly or in a mixture of two or more thereof.

In the case where the bromine content in the bromine compound is less than 40 wt%, in order to impart the flame retardance, a larger amount of the bromine compound is required to be incorporated, so that the impact resistance of the resin composition is undesirably degraded.

Also, in the case where the melting point of the bromine compound is lower than 80 ° C, the heat resistance of the resin composition is much reduced, so that this is not desirable.

The amount of the bromine compound (b) to be incorporated as the flame retarding agent in this invention is from 1 to 45 parts by weight and preferably from 2 to 30 parts by weight on the basis of 100 parts by weight of the blend of a styrene-based resin and a rubber-modified styrene-based resin, or the rubber-modified styrene-based resin as the base resin (a).

When the amount of the flame retarding agent incorporated is less than 1 part by weight, the flame retardance of the styrene-based resin composition is scarcely improved at all, while when it exceeds 45 parts by weight, the mechanical strengths, such as impact strength, are undesirable degraded.

Antimony trioxide used as the component (c) in this invention is a usually commercially available fine powder thereof and can be used in combination with a flame retarding agent in a mixing ratio of the flame retarding agent to the antimony trioxide being from 1/10 to 10/1 by weight.

The amount of antimony trioxide to be incorporated in this invention is from 0.5 to 15 parts by weight on the basis of 100 parts by weight of the blend of a styrene-based resin and a rubber-modified styrene-based resin, or the rubber-modified styrene-based resin. In the case where the amount of antimony trioxide incorporated is less than 0.5 part by weight, the flame retardance of the styrene-based resin composition obtained almost cannot be improved, while in the case where it exceeds 15 parts by weight, the mechanical strengths, such as, for example, impact strength, are undesirably degraded.

Next, the glass fibers used as the component (d) in this invention are those of which the fiber diameter is 20 $\mu m$ or less and preferably from 3 to 15 $\mu m$, and the fiber length is from 0.3 to 10 mm and preferably from 0.5 to 6 mm.

When the fiber diameter of the glass fibers exceeds 20 μm, the external appearance of the molded product of the composition undesirably becomes uneven, and also, when the fiber length of the glass fibers is less than 0.3 mm, the improvements in the heat resistance and the impact resistance of the resin composition are insufficient, and when exceeding 10 mm, the external appearance of the molded product undesirably becomes uneven.

The glass fibers are preferably those which have improved adhesion against the styrene-based resin and/or rubber-modified styrene-based resin by treating the surface thereof with an aminosilane-based coupling agent and then binding with an acrylic resin.

The amount of the glass fibers to be incorporated in this invention is from 1 to 30 parts by weight and preferably from 5 to 25 parts by weight on the basis of 100 parts by weight of the blend of a styrene-based resin and a rubber-modified styrene-based resin, or the rubber-modified styrene-based resin. The larger the amount of the glass fibers incorporated, the higher the heat resistance and the impact resistance, but when exceeding 30 parts by weight, the impact resistance may sometimes decrease on the contrary, and the external appearance of the molded product may also become poor, so that these are not desirable. On the other hand, when the amount of the glass fibers incorporated is less than one part by weight, the heat resistance of the resin composition cannot be sufficiently improved.

Further, the compositions may include (e) light discoloration inhibitors when required. As such light discoloration inhibitors, ultraviolet light absorbents, ultraviolet light stabilizers, and coloration preventing agents can be used.

The ultraviolet light absorbent used as the light discoloration inhibitor (e) in this invention can be any one chosen arbitrarily from benzotriazole compounds, benzophenone compounds, benzoate compounds and cyanoacrylate compounds, and preferably benzotriazole compounds such as, for example, 2-(2'-hydroxy-3'-t-butyl-5'-methylphenyl)-5-chlorobenzotriazole (UVA-1).

The amount of the ultraviolet light absorbent to be incorporated is from 0.005 to 1.0 part by weight and preferably from 0.01 to 0.5 part by weight on the basis of 100 parts by weight of the blend of a styrene-based resin and a rubber-modified styrene-based resin, or the rubber-modified styrene-based resin.

When the amount of the ultraviolet light absorbent is less than 0.005 part by weight, the light discoloration resistance of the resin composition cannot be sufficiently improved, whereas when exceeding 1.0 part by weight, the inherent mechanical properties of the resin composition undesirably lower.

The ultraviolet light stabilizer used as the light discoloration inhibitor (e) in this invention includes hindered amine compounds such as, for example, a compound represented by the following structural formula:

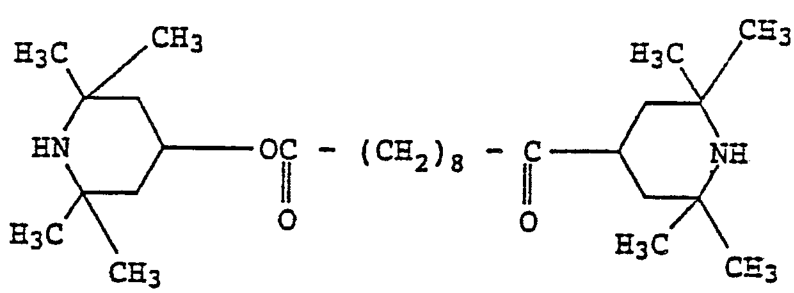

(UVS-1)

The amount of the hindered amine compound incorporated as the ultraviolet light stabilizer is from 0.005 to 1.0 part by weight and preferably from 0.01 to 0.5 part by weight on the basis of 100 parts by weight of the blend of a styrene-based resin and a rubber-modified resin, or the rubber-modified styrene-based resin.

When the amount of the hindered amine compound incorporated is less than 0.005 part by weight, the light discoloration resistance of the resin composition cannot be sufficiently improved, whereas when exceeding 1.0 part by weight, the inherent mechanical properties of the resin composition are impaired.

The coloration preventing agent used as the light discoloration inhibitor (e) in this invention includes polymeric organophosphate compounds such as, for example, a compound represented by the following formula:

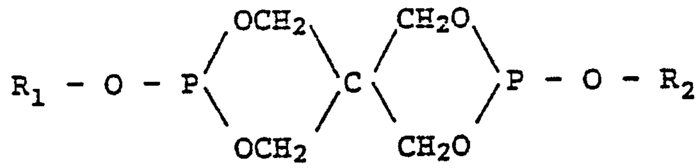

wherein $R_1$ and $R_2$ each represents a hydrogen atom, an alkyl group, an aryl group, a cycloalkyl group, an arylalkyl group or an alkylaryl group.

Specific examples of compounds represented by the above described general formula may be shown by the following rational formulae:

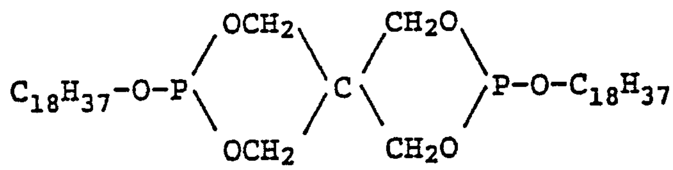

(CL-1)

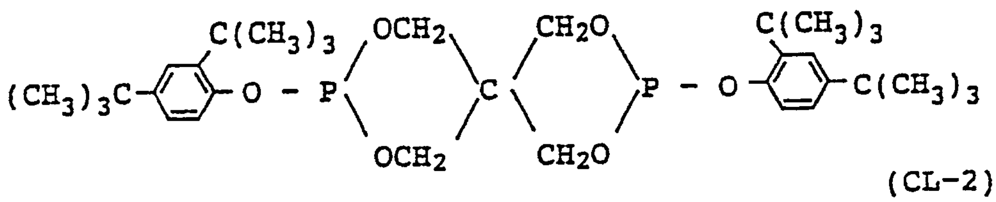

(CL-2)

The amount of the coloration preventing agent to be incorporated in this invention is from 0.005 to 1.0 part by weight and preferably from 0.01 to 0.5 part by weight on the basis of 100 parts by weight of the blend of a styrene-based resin and a rubber-modified styrene-based resin, or the rubber-modified styrene-based resin, and can be used in combination with the above described ultraviolet light absorbents and ultraviolet light stabilizers.

When the amount of the coloration preventing agent incorporated is less than 0.005 part by weight, the light discoloration resistance of the resin composition cannot be sufficiently improved, whereas when exceeding 1.0 part by weight, the inherent mechanical properties of the resin composition are impaired.

In this invention, besides the above described light discoloration inhibitors, those which can serve as acceptors of the halogen set free from flame-retarding agents at the time of irradiation of ultraviolet light or at high temperatures, e.g., basic materials such as, for example, magnesium hydroxide, or hydrotalcites, can also be incorporated so as to still further improve the light discoloration resistance.

In the flame-retardant styrene-based resin composition of this invention, in addition to the above described components, commonly used coloring agents or lubricants such as stearic acid or stearates, can further be incorporated as occasion demands.

Now, with reference to some examples, this invention will be explained more fully below, and in these examples the evaluation of the resins as well as the resin compositions was made according to the following scheme.

(1) Melt flow index (MFI): Measured at 200 °C and 5 kg according to JIS K7210.

(2) The heat distortion temperature as the measure of evaluating heat resistance was measured at a fiber stress of 18.2 bar (18.6 kg/cm$^2$) according to JIS K7207.

(3) The Izod impact strength as the measure of evaluating impact strength was measured with respect to a notched specimen having a thickness of 2 mm according to ASTM D256.

(4) Flame retardance: The vertical or horizontal combustion test prescribed in U.S. UL Standard, UL 94 was carried out with respect to a test piece having a thickness of 2.0 mm.

(5) As the measure of evaluating light discoloration inhibition, the following measurement was made. After a molded product to be tested had been irradiated for 40 hours at a black panel temperature of 63 °C without water spraying using a sunshine superlong life weatherometer (WEL-SUN-DCH type; manufactured by Suga Testing Machine Co., Ltd.), the color difference ($\Delta E$) between the irradiated

specimen and the non-irradiated was measured by means of an SM Color Computer (SM-3 type: manufactured by Suga Testing Machine Co., Ltd.).
The smaller the color difference ($\Delta E$), the better, but the criterion of the light discoloration inhibition was made as follows.

O: $\Delta E$ 3
x: $\Delta E > 3$

EXAMPLES 1 to 5 and COMPARATIVE EXAMPLES 1 to 5

Resin compositions were prepared by mixing each of the following components in the ratio shown in Table 1 and then kneading the resulting mixture at 190 to 220° C.

Molded products were obtained by injection molding the compositions at a molding temperature of 200° C.

The results of the measurement of the physical properties of the thus obtained molded products are shown in Table 1.

Styrene-based resin:
Esbrite®; manufactured by Nippon Polystyrene Industry Co., Ltd.

As general grade (GP) #8: heat distortion temperature = 90° C, Izod impact strength = 1.7 kg•cm/cm, MFI = 3 g/10 min.

Rubber-modified styrene-based resin:
Esbrite®; manufactured by Nippon Polystyrene Industry Co., Ltd.

As impact resistant grade (HI 500 HM): heat distortion temperature = 84° C, Izod impact strength = 7.0 kg•cm/cm, MFI = 3 g/10 min.

Flame retarding agents used:

| | |
|---|---|
| DBDPO: | Decabromodiphenyl oxide; manufactured by Dead Sea Bromine Co., Ltd. in Israel.<br>Trade Name: FR1210<br>Bromine content: 82%<br>Melting point: 300° C |
| TBA: | Tetrabromobisphenol A; manufactured by Teijin Chemicals Ltd.<br>Trade Name: Fire Guard® 2000<br>Bromine content: 58%<br>Melting point: 180° C |
| TBA-DBPO: | Tetrabromobisphenol A-dibromopropyl oxide; manufactured by Teijin Chemicals Ltd.<br>Trade Name: Fire Guard® 3100<br>Bromine content: 67.8%<br>Melting point: 90-105° C |
| TBS: | Tetrabromobisphenol S; manufactured by Matsunaga Chemical Industries Co., Ltd.<br>Bromine content: 55%<br>Melting point: 290° C. |

Antimony trioxide used:
TWINKLING STAR Mark; produced in Hunan, People's Republic of China
Product of high purity, containing 99.6% or more of antimony trioxide.

Glass fibers used:

A: ECS-015-T321; manufactured by Nippon Electric Glass Co., Ltd.
Fiber diameter 13 μm, fiber length 1.5 mm, processed with aminosilane-treated acrylic binder.

B: ECS-03-T321; manufactured by Nippon Electric Glass Co., Ltd.
Fiber diameter 13 $\mu$m, fiber length 3 mm, processed with aminosilane-treated acrylic binder.

TABLE 1

| | Resin Composition (mixture ratio): Base resin: Styrene-based resin Kind | Styrene-based resin Part by weight | Rubber-modified styrene-based resin Kind | Rubber-modified styrene-based resin Part by weight | Flame retarding agent Kind | Flame retarding agent Part by weight | Antimony trioxide Part by weight | Results of evaluation: Glass fibers Kind | Glass fibers Part by weight | Flame retardance | Heat Distortion temperature (°C) | Izod impact strength (kg·cm/cm) |
|---|---|---|---|---|---|---|---|---|---|---|---|---|
| Example 1 | GP #8 | 50 | 500 HM | 50 | DBDPO | 13 | 4 | A | 8 | V-0 | 90 | 6.0 |
| " 2 | " | 50 | " | 50 | " | 13 | 4 | A | 5 | V-0 | 90 | 5.5 |
| " 3 | " | 50 | " | 50 | TBA-OBPO | 10 | 3 | A | 20 | V-2 | 87 | 6.9 |
| " 4 | - | - | " | 100 | TBS | 15 | 5 | A | 8 | V-2 | 88 | 5.0 |
| " 5 | - | - | " | 100 | TBA | 25 | 5 | B | 30 | V-0 | 87 | 5.2 |
| Comparative Example 1 | GP #8 | 50 | 500 HM | 50 | DBDPO | 13 | 0.3 | A | 20 | HB | 90 | 6.5 |
| " 2 | " | 50 | " | 50 | " | 13 | 4 | A | 0.5 | V-0 | 83 | 5.8 |
| " 3 | " | 100 | " | 0 | " | 13 | 4 | A | 25 | V-0 | 94 | 3.9 |
| " 4 | " | 50 | " | 50 | " | 47 | 10 | A | 10 | V-0 | 83 | 4.0 |
| " 5 | " | 50 | " | 50 | " | 13 | 4 | A | 35 | V-2 | 97 | 4.6 |

EXAMPLES 6 TO 8 AND COMPARATIVE EXAMPLES 6 AND 7

Resin pellets were prepared by mixing each of the following components in the ratio as shown in Table 2 and then kneading the resulting mixture at 190 to 220 °C.

Then molded products were obtained by injection molding and their physical properties were measured, with the results being shown in Table 2.

Styrene-based resin

Esbrite®; manufactured by Nippon Polystyrene Industry Co., Ltd.

As general grade (GP) #8: heat distortion temperature = 90 °C, Izod impact strength = 1.7 kg•cm/cm, MFI = 3 g/10 min.

Rubber-modified styrene-based resin:

Esbrite®; manufactured by Nippon Polystyrene Industry Co., Ltd.

As impact resistant grade (HI 500 HM): heat distortion temperature = 84 °C, Izod impact strength = 7.0 kg•cm/cm, MFI = 3 g/10 min.

As superimpact resistant grade (HI 500 SB): heat distortion temperature = 82 °C, Izod impact strength = 12 kg•cm/cm, MFI = 2.2 g/10 min.

Flame retarding agent used:

Tetrabromobisphenol A carbonate oligomer; manufactured by Teijin Chemicals Ltd.
Trade Name: Fire Guard® 7500
Bromine content: 50.6%
Melting point: 220 °C.

Antimony trioxide used:

TWINKLING STAR Mark; produced in Hunan, People's Republic of China.
Product of high purity, containing 99.6% or more of antimony trioxide.

Glass fibers used:

ECS-015-T321; manufactured by Nippon Electric Glass Co., Ltd.
Fiber diameter 13 μm, fiber length 1.5 mm, processed with aminosilane-treated acrylic binder.

Light discoloration inhibitor used:

The case denoted by light discoloration inhibitor "present" shows that 0.2 part by weight of ultraviolet light absorbent (a benzotriazole compound; Sumisorb® 300 (UVA-1); manufactured by Sumitomo Chemical Company, Limited), 0.1 part by weight of ultraviolet light stabilizer (a hindered amine compound; Sanol® LS770 (UVS-1) manufactured by Ciba-Geigy (Japan) Limited), and 0.05 part by weight of coloration preventing agent (a polymeric organophosphate compound; Ultranox® 626 (CL-2) manufactured by Borg-Warner Corp.) were incorporated. The case denoted by light discoloration inhibitor "absent" indicates that the above described mixture of ultraviolet light absorbent, ultraviolet light stabilizer and coloration preventing agent was not incorporated.

TABLE 2

| | Resin composition (mixing ratio): Base resin: Styrene-based resin Kind | Styrene-based resin Part by weight | Rubber-modified styrene-based resin Kind | Rubber-modified styrene-based resin Part by weight | Flame retarding agent Part by weight | Antimony trioxide Part by weight | Glass fiber Part by weight | Light discoloration inhibitor | Results of evaluation: Flame resistance | Light discoloration resistance | Heat distortion temperature (°C) | Izod impact strength (kg·cm/cm) |
|---|---|---|---|---|---|---|---|---|---|---|---|---|
| Example 6 | - | - | 500 HM | 100 | 18 | 4.5 | 8 | present | V-0 | ○ | 94 | 6.0 |
| " 7 | GP#8 | 20 | " | 80 | 18 | 4.5 | 10 | present | V-0 | ○ | 94 | 5.2 |
| " 8 | - | - | 500 HM<br>500 SB | 60<br>40 | 21 | 5 | 8 | present | V-0 | ○ | 89 | 7.2 |
| Comparative Example 6 | - | - | 500 HM | 100 | 18 | 4.5 | 8 | absent | V-0 | × | 94 | 6.1 |
| " 7 | - | - | 500 HM<br>500 SB | 60<br>40 | 21 | 5 | 8 | absent | V-0 | × | 90 | 7.2 |

As is readily understood from the foregoing description, the flame-retardant styrene-based resin composition of this invention is excellent in flame retardance, heat resistance and impact resistance without impairing inherent mechanical characteristics of the styrene-based resin.

Further, each of the components which are incorporated in the flame-retardant styrene-based resin composition of this invention are not only easy to handle but also nonpoisonous, so that the molded

products obtained from the composition are useful as armoring materials or the like, of light electrical appliances, office machines and similar products.

## Claims

1. A molded product obtainable by molding a flame-retardant styrene-based resin composition which comprises:
   (a) 100 parts by weight of a blend of a styrene-based resin and a rubber-modified styrene-based resin, or a rubber-modified styrene-based resin;
   (b) from 1 to 45 parts by weight of a bromine compound whose bromine content is 40 wt% or more and whose melting point is 80° C or higher;
   (c) from 0.5 to 15 parts by weight of antimony trioxide; and
   (d) from 1 to 30 parts by weight of glass fibers,
   wherein the heat distortion temperature of said molded product obtainable from said composition is 85° C or higher and the impact strength thereof is 5.0 kg·cm/cm or more.

2. A molded product as claimed in Claim 1, wherein the heat distortion temperature of the component (a) is 75° C or higher.

3. A molded product as claimed in Claim 1 or 2, wherein said rubber-modified styrene-based resin is a rubber-modified copolymer of styrene, methylstyrene or chlorostyrene and a copolymerisable monomer or elastomer.

4. A molded product as claimed in Claim 3, wherein said elastomer is a polydiene rubber, styrene-diene elastomer or block copolymer elastomer containing a polybutadiene block.

5. A molded product as claimed in any of Claims 1 to 4, wherein the component (b) is at least one of decabromodiphenyl oxide, octabromodiphenyl oxide, tetrabromobisphenol A, tetrabromobisphenol A-bis(2,3-$^{3}$-dibromopropyl) oxide, bis(tribromophenoxy)ethane and tetrabromobisphenol S.

6. A molded product as claimed in any of Claims 1 to 4, wherein the bromine compound (b) is a tetrabromobisphenol A carbonate oligomer having as repeating units number an integer of 3 to 20.

7. A molded product as claimed in any preceding claim, wherein the bromine compound (b) has a bromine content of 50 wt% or more.

8. A molded product as claimed in any preceding claim, wherein the glass fibers have a diameter of 20 μm or less and a fiber length of 0.3 to 10 mm.

9. A molded product as claimed in any preceding claim, wherein the glass fibers have their surface treated with an aminosilane coupling agent and then binding with an acrylic resin.

10. A molded product as claimed in any preceding claim, wherein said resin composition also contains as a light discoloration inhibitor:
    (i) from 0.005 to 1.0 part by weight of an ultraviolet light absorbent,
    (ii) from 0.005 to 1.0 part by weight of an ultraviolet light stabilizer, and
    (iii) from 0.005 to 1.0 part by weight of a coloration preventing agent, each per 100 parts by weight of the component (a).

## Revendications

1. Un produit moulé qui peut être obtenu par moulage d'une composition ignifugée de résine à base de styrène qui comprend :
   (a) 100 parties en poids d'un mélange d'une résine à base de styrène et d'un mélange à base de styrène modifiée par un caoutchouc, ou bien d'une résine à base de styrène modifiée par un caoutchouc ;
   (b) de 1 à 45 parties en poids d'un composé bromé ayant une teneur en brome de 40 % en poids ou plus et un point de fusion de 80° C ou plus ;

(c) de 0,5 à 15 parties en poids de trioxyde d'antimoine ; et
(d) de 1 à 30 parties en poids de fibres de verre,
dans lequel la température de déformation à la chaleur dudit produit moulé accessible à partir de ladite composition est de 85 °C ou plus et sa résistance au choc est de 5,0 kg.cm/cm ou plus.

2. Un produit moulé selon la revendication 1, dans lequel la température de déformation à la chaleur du composant (a) est de 75 °C ou plus.

3. Un produit moulé selon la revendication 1 ou 2, dans lequel ladite résine à base de styrène modifiée par un caoutchouc est un copolymère de styrène, de méthylstyrène ou de chlorostyrène et d'un monomère ou élastomère copolymérisable, modifié par un caoutchouc.

4. Un produit moulé selon la revendication 3, dans lequel ledit élastomère est un caoutchouc de polydiène, un élastomère styrène-diène ou un copolymère élastomère séquencé contenant une séquence de polybutadiène.

5. Un produit moulé selon l'une quelconque des revendications 1 à 4, dans lequel le composant (b) est au moins un produit choisi parmi l'oxyde de décabromodiphényle, l'oxyde d'octabromodiphényle, le tétrabromobisphénol A, l'éther de bis(2,3-dibromopropyle) de tétrabromobisphénol A, le bis-(tribromophénoxy)éthane et le tétrabromobisphénol S.

6. Un produit moulé selon l'une quelconque des revendications 1 à 4, dans lequel le composé bromé (b) est un oligomère de carbonate de tétrabromobisphénol A ayant un nombre entier de motifs récurrents de 3 à 20.

7. Un produit moulé selon l'une quelconque des revendications précédentes, dans lequel le composé bromé (b) a une teneur en brome de 50 % en poids ou plus.

8. Un produit moulé selon l'une quelconque des revendications précédentes, dans lequel les fibres de verre ont un diamètre de 20 $\mu$m ou moins et une longueur de 0,3 à 10 mm.

9. Un produit moulé selon l'une quelconque des revendications précédentes, dans lequel les fibres de verre sont traitées en surface par un agent d'accrochage à base d'aminosilane et ensuite liées par une résine acrylique.

10. Un produit moulé selon l'une quelconque des revendications précédentes, dans lequel ladite composition de résine contient également comme inhibiteur de coloration à la lumière :
(i) de 0,005 à 1,0 partie en poids d'un absorbeur d'ultraviolets,
(ii) de 0,005 à 1,0 partie en poids d'un stabilisant aux ultraviolets, et
(iii) de 0,005 à 1,0 partie en poids d'un agent empêchant la coloration,
chacun pour 100 parties en poids du composant (a).

**Ansprüche**

1. Geformtes Produkt, erhältlich durch Formung einer flammenhemmenden Harzzusammensetzung auf Styrolbasis, umfassend:
(a) 100 Gew.-Teile eines Gemisches aus einem Harz auf Styrolbasis und einem kautschukmodifizierten Harz auf Styrolbasis, oder eines kautschukmodifizierten Harzes auf Styrolbasis;
(b) von 1 bis 45 Gew.-Teile einer Bromverbindung, deren Bromgehalt mindestens 40 Gew.-% und deren Schmelzpunkt mindestens 80 °C beträgt;
(c) von 0,5 bis 15 Gew.-Teile Antimontrioxid; und
(d) von 1 bis 30 Gew.-Teile Glasfasern,
wobei die Erweichungstemperatur des geformten Produktes, das aus der Zusammensetzung erhältlich ist, mindestens 85 °C und dessen Schlagfestigkeit mindestens 5,0 kg.cm/cm beträgt.

2. Geformtes Produkt nach Anspruch 1, wobei die Erweichungstemperatur der Komponente (a) mindestens 75 °C beträgt.

3. Geformtes Produkt nach Anspruch 1 oder 2, wobei das kautschukmodifizierte Harz auf Styrolbasis ein kautschukmodifiziertes Copolymer von Styrol, Methylstyrol oder Chlorstyrol und einem copolymerisierbaren Monomer oder Elastomer ist.

4. Geformtes Produkt nach Anspruch 3, wobei das Elastomer ein Polydienkautschuk, Styrol-Dienelastomer oder Blockcopolymerelastomer ist, das einen Polybutadienblock enthält.

5. Geformtes Produkt nach einem der Ansprüche 1 bis 4, wobei die Komponente (b) mindestens eine der Verbindungen Decabromdiphenyloxid, Octabromdiphenyloxid, Tetrabrombisphenol-A, Tetrabrombisphenol-A-bis(2,3-dibrompropyl)oxid, Bis(tribromphenoxy)ethan oder Tetrabrombisphenol-S ist.

6. Geformtes Produkt nach einem der Ansprüche 1 bis 4, wobei die Bromverbindung (b) ein Tetrabrombisphenol-A-carbonatoligomer ist, wobei die Zahl der sich wiederholenden Grundeinheiten eine ganze Zahl von 3 bis 20 ist.

7. Geformtes Produkt nach einem der vorstehenden Ansprüche, wobei die Bromverbindung (b) einen Bromgehalt von mindestens 50 Gew.-% aufweist.

8. Geformtes Produkt nach einem der vorstehenden Ansprüche, wobei die Glasfasern einen Durchmesser von höchstens 20 $\mu$m und eine Faserlänge von 0,3 bis 10 mm aufweisen.

9. Geformtes Produkt nach einem der vorstehenden Ansprüche, wobei die Oberfläche der Glasfasern mit einem Aminosilankopplungsmittel behandelt und dann mit einem Acrylharz verbunden wird.

10. Geformtes Produkt nach einem der vorstehenden Ansprüche, wobei die Harzzusammensetzung zusätzlich pro 100 Gew.-Teilen der Komponente (a) als Licht-Verfärbungshemmstoff enthält:
    (i) von 0,005 bis 1,0 Gew.-Teile eines ultraviolettes Licht absorbierenden Mittels,
    (ii) von 0,005 bis 1,0 Gew.-Teile eines gegen ultraviolettes Licht stabilisierenden Mittels, und
    (iii) von 0,005 bis 1,0 Gew.-Teile eines Verfärbungsschutzmittels.